# FASCICULE DE BREVET EUROPEEN

(11) **EP 0 821 688 B1**
(45) Date de publication et mention de la délivrance du brevet: **26.07.2000**
(21) Numéro de dépôt: 96912096.3
(22) Date de dépôt: 11.04.1996
(51) Int. Cl.: C07F 7/08, A01N 55/00

(54) **NOUVEAUX DERIVES DE L'ACIDE BETA-METHOXY ACRYLIQUE, LEUR PROCEDE DE PREPARATION ET LEUR APPLICATION COMME PESTICIDES**
BETA-METHOXYACRYLSÄURE-DERIVATE, VERFAHREN ZU IHRER HERSTELLUNG UND IHRE VERWENDUNG ALS PESTIZIDE
NOVEL BETA-METHOXY ACRYLIC ACID DERIVATIVES, METHOD FOR PREPARING SAME, AND USE OF SAID DERIVATIVES AS PESTICIDES

(30) Priorité: 14.04.1995 FR 9504506
(43) Date de publication de la demande: 04.02.1998
(73) Titulaire: Hoechst Schering AgrEvo S.A., 75020 Paris (FR)
(72) Inventeur: LAUGRAUD, Sylvain, F-75003 Paris (FR); REINIER, Nicole Résidence Val-Fleuri, F-13009 Marseille (FR)
(74) Mandataire: Rippel, Hans Christoph, Dr.
(86) Numéro de dépôt international: FR9600544
(87) Numéro de publication internationale: WO9632399

(56) Documents cités:
- EP-A- 0 601 477

## Description

La présente invention concerne de nouveaux dérivés de l'acide β-méthoxy acrylique, leur procédé de préparation et leur application comme pesticides.

L'invention a pour objet les composés de formule (I) : 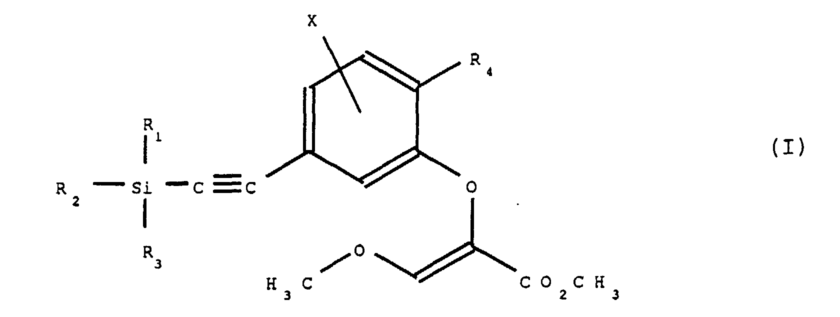 dans lesquels :
- R₁, R₂ et R₃ identiques ou différents représentent un radical alkyle linéaire ramifié ou cyclique alkényle ou alkynyle renfermant jusqu'à 8 atomes de carbone éventuellement substitué par un ou plusieurs atomes d'halogène, un radical aryle éventuellement substitué par un ou plusieurs atomes d'halogène, un ou plusieurs radicaux hydroxyle, un ou plusieurs radicaux alkyle linéaires ou ramifiés éventuellement substitués par un ou plusieurs atomes d'halogène, un ou plusieurs radicaux O-alkyle ou S-alkyle éventuellement substitués par un ou plusieurs atomes d'halogène,
- X représente un atome d'hydrogène, un atome d'halogène, un radical alkyle, alkényle, alkynyle, O-alkyle, O-alkényle, O-alkynyle, S-alkyle, S-alkényle ou S-alkynyle, éventuellement substitués par un ou plusieurs atomes d'halogène et renfermant jusqu'à 11 atomes de carbone, un radical aryle renfermant jusqu'à 14 atomes de carbone, un radical C≡N, NO₂, NH₂, 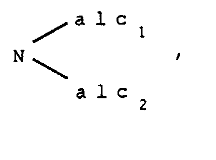 CO₂alc₃, alc₁, alc₂ et alc₃, identiques ou différents l'un de l'autre, représentant un radical alkyle renfermant jusqu'à 8 atomes de carbone,
- R₄ représente l'une des valeurs indiquées ci-dessus pour X à l'exception de l'hydrogène.

La géométrie de la double liaison de la partie β-méthoxy acrylique peut être Z, E ou un mélange E + Z.

Dans la définition des divers substituants :
- alkyle représente de préférence un radical méthyle, éthyle, propyle, isopropyle, butyle, isobutyle, sec-butyle ou ter-butyle, pentyle, hexyle, heptyle et octyle linéaires ou ramifiés,
- le radical alkyle cyclique représente de préférence un radical cyclopropyle, cyclobutyle ou cyclopentyle,
- le radical alkényle ou alkynyle est de préférence un radical éthényle, éthynyle, propényle, propynyle, butényle ou butynyle,
- le radical hétérocyclique est de préférence un radical pyrrolidinyle, pyrazolinyle, pipéridinyle, pipérazinyle ou morpholinyle,
- le radical aryle est de préférence un radical phényle.

L'invention a plus particulièrement pour objet les composés de formule (I) dans lesquels la géométrie de la double liaison exo (éther d'énol) est Z.

L'invention a notamment pour objet les composés de formule (I) dans lesquels R₁, R₂ et R₃ représentent chacun un radical alkyle renfermant jusqu'à 4 atomes de carbone et notamment ceux dans lesquels R₁, R₂ et R₃ représentent chacun un radical méthyle ou éthyle, ainsi que ceux dans lesquels R₄ représente un atome d'halogène, ainsi que ceux dans lesquels R₄ représente un radical alkyle renfermant jusqu'à 4 atomes de carbone.

Parmi les composés préférés de l'invention, on peut citer plus particulièrement ceux dont la préparation est donnée ci-après dans la partie expérimentale et tout spécialement les composés des exemples 1, 4 et 5.

L'invention a également pour objet un procédé de préparation des composés de formule (I) caractérisé en ce que l'on soumet un composé de formule (II) : 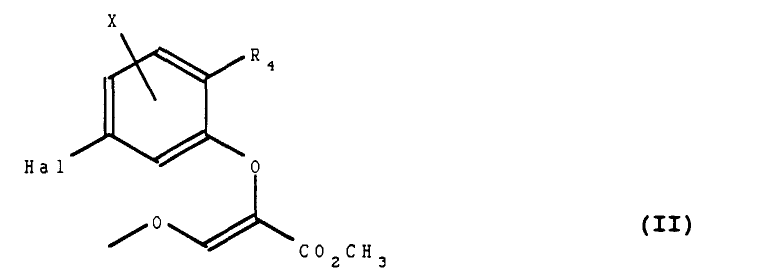 dans laquelle Hal représente un atome d'halogène, X et R₄ conservent leur signification précédente, à l'action d'un composé de formule (III) : 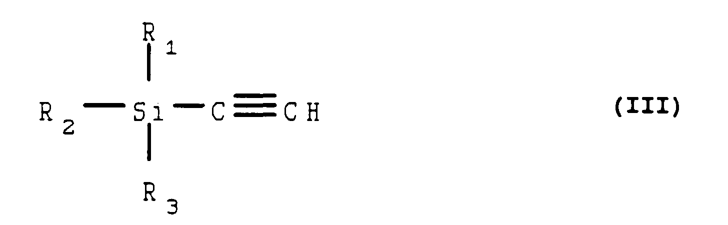 dans laquelle R₁, R₂ et R₃ conservent leur signification précédente pour obtenir le composé de formule (I) correspondant.

Dans un mode de réalisation préféré du procédé de l'invention, la réaction entre le composé de formule (II) et le composé de formule (III) est réalisée au sein d'un solvant dipolaire aprotique comme l'acétonitrile ou le diméthylformamide, en présence d'une amine tertiaire comme la triéthylamine, et en présence de palladium, par exemple en présence de chlorure de bis(triphénylphosphine) palladium (II), ou de palladium métallique supporté par du charbon, d'une phosphine tertiaire comme la triphénylphosphine et d'un catalyseur à base de cuivre comme l'iodure cuivreux, - Hal représente de préférence un atome de brome ou d'iode.

Les composés de formule (II) sont des produits nouveaux et sont en eux-mêmes un objet de la présente invention.

Les composés de formule (II) peuvent être préparés selon le schéma réactionnel : 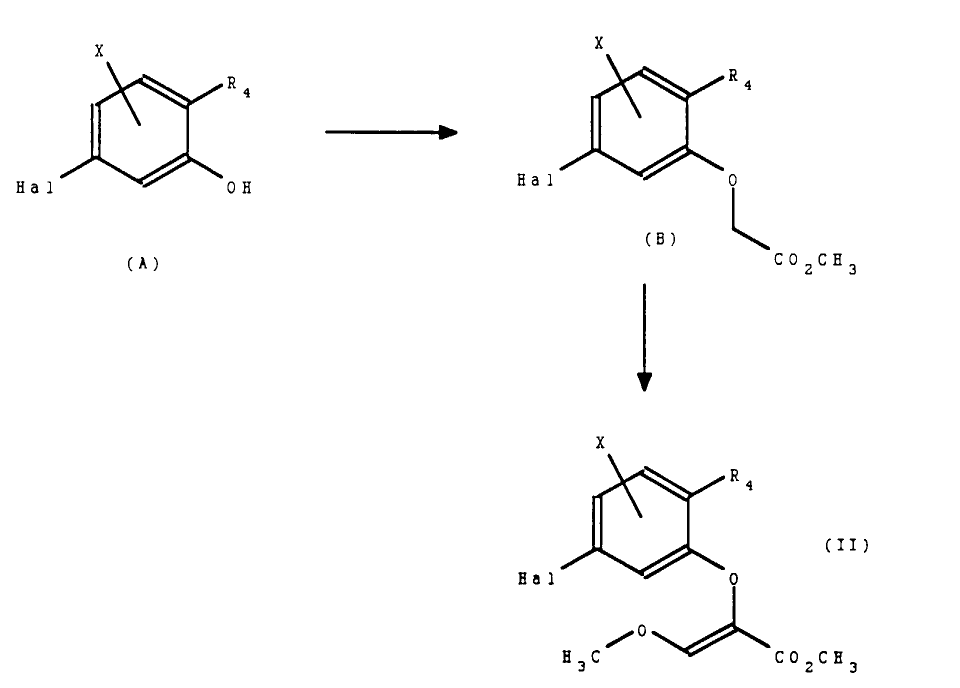 Le produit de départ de formule (A) peut être préparé selon le procédé suivant :

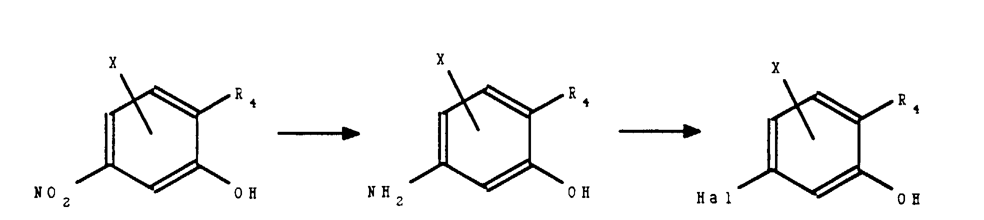

Les composés de formule (II) peuvent également être préparés selon le schéma réactionnel suivant :

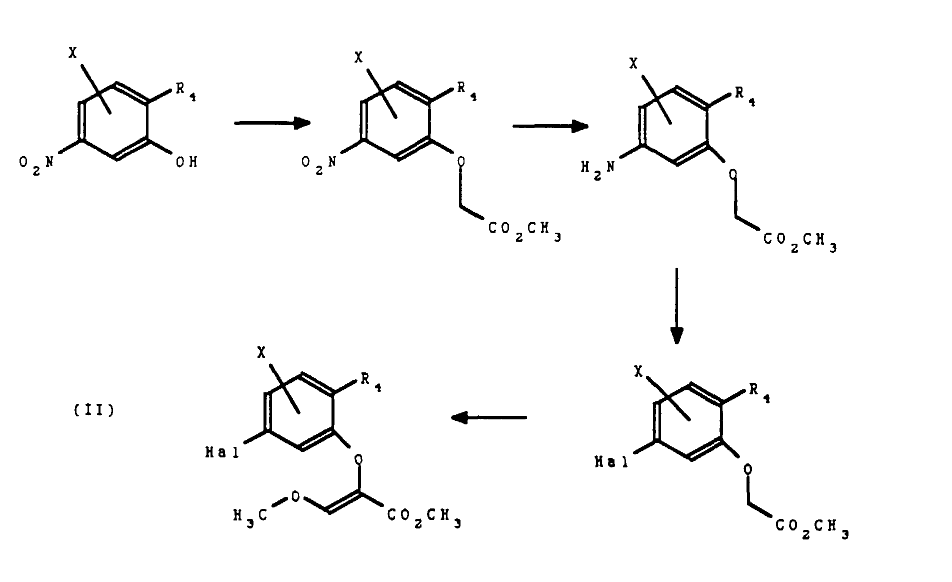

La partie expérimentale exposée ci-après donne des exemples de préparation de composés de formule (II).

Les composés de formule (I) présentent d'intéressantes propriétés qui permettent leur utilisation dans la lutte contre les parasites. Il peut s'agir de la lutte contre les parasites des végétaux qu'il s'agisse des parasites du sol ou des parties aériennes, des parasites des locaux et des parasites des animaux.

Les composés de formule (I) présentent des propriétés insecticides, acaricides, nématicides ainsi que des propriétés fongicides.

Les produits de formule (I) peuvent ainsi être utilisés pour lutter contre les insectes dans les locaux, pour lutter notamment contre les mouches, les moustiques et les blattes.

Les produits de formule (I) peuvent aussi être utilisés pour lutter contre les insectes et autres parasites du sol, par exemple les coléoptères, comme Diabrotica, les taupins et les vers blancs, les myriapodes comme les scutigérelles et les blaniules, et les diptères comme les cécydomies et les lépidoptères comme les noctuelles terricoles.

Les produits de formule (I) possèdent également d'excellentes activités acaricides comme le montrent les résultats des tests biologiques figurant ci-après.

Les produits de formule (I) peuvent aussi être utilisés pour lutter contre les acariens parasites des végétaux.

Les composés de formule (I) peuvent aussi être utilisés pour lutter contre les nématodes parasites des végétaux.

Les composés de formule (I) peuvent encore être utilisés pour lutter contre les acariens parasites des animaux, pour lutter par exemple contre les tiques et notamment les tiques de l'espèce Boophilus, celles de l'espèce Hyalomnia, celles de l'espèce Amblyomnia et celles de l'espèce Rhipicephalus, ou pour lutter contre toutes sortes de gales et notamment la gale sarcoptique, la gale psoroptique et la gale chorioptique.

L'invention a donc également pour objet les compositions destinées à la lutte contre les parasites des animaux à sang chaud, les parasites des locaux et des végétaux, caractérisées en ce qu'elles renferment au moins l'un des produits définis ci-dessus.

Les compositions selon l'invention sont préparées selon les procédés usuels de l'industrie agrochimique ou de l'industrie vétérinaire ou de l'industrie des produits destinées à la nutrition animale.

Dans ces compositions destinées à l'usage agricole et à l'usage dans les locaux, la ou les matières actives peuvent être additionnées éventuellement d'un ou plusieurs autres agents pesticides. Ces compositions peuvent se présenter sous forme de poudres, granulés, suspensions, émulsions, solutions, solutions pour aérosols, bandes combustibles, appâts ou autres préparations employées classiquement pour l'utilisation de ce genre de composés.

Outre le principe actif, ces compositions contiennent, en général, un véhicule et/ou un agent tensio-actif, non ionique, assurant, en outre, une dispersion uniforme des substances constitutives du mélange. Le véhicule utilisé peut être un liquide, tel que l'eau, l'alcool, les hydrocarbures ou autres solvants organiques, une huile minérale, animale ou végétale, une poudre telle que le talc, les argiles, les silicates, le kieselguhr ou un solide combustible.

L'invention a notamment pour objet les compositions insecticides renfermant comme principe actif au moins l'un des produits définis ci-dessus.

Les compositions insecticides selon l'invention contiennent de préférence de 0,005 % à 10 % en poids de matière active.

Selon un mode opératoire avantageux, pour un usage dans les locaux, les compositions selon l'invention sont utilisées sous forme de compositions fumigantes.

Les compositions selon l'invention peuvent alors être avantageusement constituées, pour la partie non active, d'un serpentin insecticide (ou coil) combustible, ou encore d'un substrat fibreux incombustible. Dans ce dernier cas, le fumigant obtenu après incorporation de la matière active est placé sur un appareil chauffant tel qu'un émanateur électrique.

Dans le cas où l'on utilise un serpentin insecticide, le support inerte peut être, par exemple, composé de marc de pyrèthre, poudre de Tabu (ou poudre de feuilles Machilus Thumbergii), poudre de tige de pyrèthre, poudre de feuille de cèdre, poudre de bois (telle que de la sciure de pin) amidon et poudre de coque de noix de coco.

La dose de matière active peut alors être, par exemple, de 0,03 à 1 % en poids.

Dans le cas où l'on utilise un support fibreux incombustible, la dose de matière active peut alors être, par exemple, de 0,03 à 95 % en poids.

Les compositions selon l'invention pour un usage dans les locaux peuvent aussi être obtenues en préparant une huile pulvérisable à base de principe actif, cette huile imbibant la mèche d'une lampe et étant alors soumise à la combustion.

La concentration du principe actif incorporé à l'huile est, de préférence, de 0,03 à 95 % en poids.

Les compositions insecticides selon l'invention, comme les compositions acaricides et nématicides, peuvent être additionnées éventuellement d'un ou plusieurs autres agents pesticides. Les compositions acaricides et nématicides peuvent se présenter notamment sous forme de poudre, granulés, suspensions, émulsions, solutions.

L'invention a de plus pour objet, les compositions acaricides comprenant à titre de principe actif au moins un des produits de formule (I) telle que définie précédemment.

Pour l'usage acaricide, on utilise de préférence des poudres mouillables, pour pulvérisation foliaire, contenant de 1 à 80 % en poids de matière active ou des liquides pour pulvérisation foliaire contenant de 1 à 500 g/l de principe actif. On peut également employer des poudres pour poudrages foliaires contenant de 0,05 à 3 % de matière active.

Pour l'usage nématicide, on utilise de préférence des liquides pour traitement des sols contenant de 300 à 500 g/l de principe actif.

Les composés de formule (I) présentent une excellente activité fongicide. Ils permettent de lutter contre les champignons qui ont déjà pénétré à l'intérieur des tissus des végétaux. Ce qui est particulièrement intéressant dans le cas où il n'est plus possible de lutter contre les maladies causées par les champignons une fois que la contamination a déjà eu lieu. Le spectre d'activité des composés de formule (I) couvre un grand nombre de champignons phytopathogènes d'importance économique variée, par exemple Pyricularia oryzae, Venturia inaequalis, Cercospora beticola, Erysiphicaceae (Sp. poudre d'oïdium), Fusarium-, Drechslera- et Leptosphaeria-, Plasmopara viticola, Phytophtora infestans, Pseudoperonospora cubensis, rouilles diverses, souches de Botrylis cinerea sensibles et résistantes au BCM- et/ou au Dicarboximide-, Sclerotinia solerotiorum, souches de Pseudocercosporella herpotrichoïdes- résistantes au BMC et Pellicularia sasakii.

L'invention a donc tout particulièrement pour objet, les compositions fongicides comprenant à titre de principe actif au moins un des produits de formule (I) telle que définie précédemment et plus spécialement les compositions fongicides renfermant de 0,001 à 1% en poids de composés de formule (I).

De plus, les composés de l'invention peuvent être aussi utilisés dans différents secteurs industriels par exemple pour protéger le bois ou comme agent de conservation des peintures.

L'invention s'étend également aux compositions fongicides qui renferment outre les composés de formule (I) des agents de formulation appropriés.

Les compositions de l'invention renferment en général de 1 à 95 % en poids de principe actif.

Les formulations possibles varient en fonction de paramètres biologiques et physicochimiques. Il peut s'agir par exemple de poudres mouillables, de concentrés émulsifiables, de solutions aqueuses, d'émulsions, de solutions à vaporiser, de dispersions dans l'huile ou dans l'eau, de suspoémulsions, de poudres, d'agents de traitement des semences, de granulés par exemple de microgranulés, de granulés à pulvériser, de granulés enduits, de granulés d'absorption, de granulés dispersibles dans l'eau, de formulation ULV, de microcapsules, de cires ou d'appâts.

Les exemples suivants illustrent l'invention sans toutefois la limiter.

### EXEMPLE 1 : (Z) 2-[2-chloro 5-[2-(triméthylsilyl) 1-éthynyl] phénoxy] 3-méthoxy propénoate de méthyle

On porte au reflux sous atmosphère d'azote pendant 3 heures, un mélange renfermant 0,9 g du produit de la préparation 1, 0,78 ml de triméthylsilyl acétylène, 78 mg de PdCl₂(PPh₃)₂ et 21 mg d'iodure de cuivre, 10 ml d'acétonitrile et 5 ml de triéthylamine. On maintient le reflux pendant 2 heures. On évapore la solution sous pression réduite, reprend le résidu avec le chlorure de méthylène et le lave à l'eau. On sèche la phase organique sur sulfate de magnésium et évapore sous pression réduite. On chromatographie le produit obtenu en éluant avec le mélange hexane-acétate d'éthyle 8/2. On obtient ainsi 0,88 g de produit recherché fondant à 148°C.
RMN CDCl₃ ppm
0,24 (s) : Si(CH₃)₃ ; 3,73 (s) - 3,89 (s) : les OCH₃ ; 6,88 (d) : H₃ ; 7,05 (dd) : H₅ ; 7,29 (d) : H₆ ; 7,36 (s) : l'hydrogène éthylénique ΔZ.

### EXEMPLE 2 : (Z) 2-[2-chloro 5-[2-(triéthylsilyl) 1-éthynyl] phénoxy] 3-méthoxy propénoate de méthyle

En opérant comme précédemment avec le triéthylsilyl acétylène, on a obtenu le produit recherché. F = 93°C. RMN CDCl₃ ppm
0,66 (q) - 1,03 (t) : les protons des éthyles ; 3,73 (s) - 3,89 (s) : les protons des méthoxy ; 6,87 (d) : H₆ ; 7,06 (dd) : H₄ ; 7,30 (d) : H₃ ; 7,37 (s) : HΔZ.

### Préparation du produit de départ de l'exemple 1 et de l'exemple 2 : 2-(5-bromo 2-chlorophénoxy) 3-méthoxy propénoate de méthyle

### Stade A : 5-bromo 2-chlorophénol

On ajoute goutte à goutte à 0°C, 9 ml de tribromure de bore dans une solution renfermant 20 g de 5-bromo 2-chloro anisole dans 200 ml de chlorure de méthylène. On agite 10 minutes à 0°C, puis 24 heures à 20°C et verse dans un mélange d'eau et de glace. On agite pendant 30 minutes la suspension résultante, extrait au chlorure de méthylène, sature avec du chlorure de sodium et extrait deux fois au chlorure de méthylène. On rassemble les phases organiques, les sèche sur sulfate de magnésium, évapore sous pression réduite et obtient 18,5 g de 5-chloro 2-bromophénol. F = 56°C.

### Stade B : (5-bromo 2-chlorophénoxy) acétate de méthyle

On ajoute 12 g de carbonate de potassium dans une solution renfermant 9 g du produit préparé au stade A et 4,3 ml de bromoacétate de méthyle dans 200 ml d'acétone anhydre. On chauffe au reflux la suspension obtenue, sous atmosphère d'azote pendant 3 heures, verse dans l'eau et extrait au chlorure de méthylène. On rassemble les phases organiques, les lave avec une solution saturée en chlorure de sodium, les sèche sur sulfate de magnésium, et évapore sous pression réduite. On lave au pentane et obtient 11,4 g de produit recherché fondant à 72°C.

### Stade C : 2-(5-bromo 2-chlorophénoxy) 3-méthoxy propénoate de méthyle (ΔZ)

On chauffe à 80°C pendant 1 heure une suspension de 9 g du produit obtenu au stade B dans 75 ml de bis-diméthylamino terbutoxy méthane. On laisse revenir la température à 20°C, verse dans l'eau et extrait au chlorure de méthylène. On rassemble les phases organiques, sèche sur sulfate de magnésium et évapore sous pression réduite.

On reprend l'huile résiduelle précédente dans 300 ml de THF. A cette solution refroidie à 0°C, on ajoute lentement 100 ml d'acide chlorhydrique 2N. On agite le milieu réactionnel pendant 1 heure à 20°C, puis le verse sur une solution aqueuse saturée en chlorure de sodium, extrait à l'éther éthylique. On rassemble les phases organiques, sèche sur sulfate de magnésium, évapore sous pression réduite.

On reprend le produit ainsi obtenu dans 250 ml d'acétone. On ajoute 3,4 ml de sulfate de méthyle et 8,9 g de carbonate de potassium. On agite la suspension sous atmosphère d'azote pendant 20 heures, verse dans l'eau et extrait au chlorure de méthylène. On rassemble les phases organiques, les sèche sur sulfate de magnésium et évapore sous pression réduite. On chromatographie le produit obtenu sur silice en éluant avec le mélange heptane-acétate d'éthyle (75-25) et obtient 9,95 g de produit recherché.

### EXEMPLE 3 : (Z) 2-[2-méthoxy 5-[2-(triéthylsilyl) 1-éthynyl] phénoxy) 3-méthoxy propénoate de méthyle

En opérant comme à l'exemple 1, à partir du produit de départ décrit ci-après et de triéthylsilyl acétylène dans le diméthylformamide et à 20°C, on obtient le produit recherché fondant à 104°C.
RMN CDCl₃ ppm
0,65 (q) - 1,03 (t) : les protons des éthyles ; 3,72 (s) - 3,86 (s) - 3,91 (s) : les OMe ; 6,82 (d) : H₆ ; 6,84 (d) : H₅ ; 7,12 (dd) : H₅ ; 7,34 (s) : HΔZ.

### Produit de départ de l'exemple 3 : (Z) 2-(5-iodo 2-méthoxy phénoxy) 3-méthoxy propénoate de méthyle

Le produit de départ de l'exemple 3 a été préparé comme suit :

### Stade A : (2-méthoxy 5-nitro phénoxy) acétate de méthyle

On ajoute 24,5 g de carbonate de potassium dans une solution renfermant 15 g de 2-méthoxy 5-nitro phénol et 8,8 ml de bromoacétate de méthyle. On chauffe au reflux sous atmosphère d'azote la suspension résultante pendant 2 heures puis verse dans l'eau et extrait à l'acétate d'éthyle. On rassemble les phases organiques, les lave avec une solution aqueuse saturée en chlorure de sodium, les sèche sur sulfate de magnésium et évapore sous pression réduite. On lave le solide résiduel au pentane et obtient 20,7 g de produit recherché fondant à 109°C.

### Stade B : (5-amino 2-méthoxy phénoxy) acétate de méthyle

On ajoute 0,66 g de palladium sur charbon à 10 % massique dans une solution renfermant 3 g du produit préparé au stade A, et 100 ml d'acétate d'éthyle. On agite la suspension obtenue sous 1,3 atmosphère d'hydrogène. Après arrêt de l'absorption d'hydrogène, on amène la pression à l'atmosphère normale, on filtre et évapore sous pression réduite. On obtient 2,6 g de produit recherché fondant à 79°C.

### Stade C : (5-iodo 2-méthoxy phénoxy) acétate de méthyle

On ajoute 2,02 g de produit préparé au stade B dans une solution renfermant 20 ml d'eau, 6 ml d'acide acétique et 1 ml d'acide sulfurique concentré. On refroidit la suspension obtenue à 0°C. On ajoute alors goutte à goutte en 35 minutes une solution de 0,66 g de nitrite de sodium dans 5 ml d'eau. On agite la solution obtenue pendant 45 minutes à 0°C. On ajoute alors, goutte à goutte en 40 minutes, une solution de 3,2 g d'iodure de potassium dans 5 ml d'eau. On maintient sous agitation pendant 1 heure à 0°C puis 2 heures à 10°C, puis 16 heures à 20°C. On verse dans l'eau et extrait au chlorure de méthylène. On rassemble les phases organiques les lave à l'eau, avec une solution saturée en bicarbonate de sodium, avec une solution aqueuse de bisulfite de sodium, sèche sur sulfate de magnésium et évapore sous pression réduite. On chromatographie le produit obtenu en éluant avec le chlorure de méthylène. On obtient 2,0 g de produit recherché fondant à 100°C.

### Stade D : (Z) 2-(5-iodo 2-méthoxy phénoxy) 3-méthoxy propénoate de méthyle

En opérant comme au dernier stade de la préparation du produit de départ des exemples 1 et 2, on a obtenu le produit recherché fondant à 116°C.

### EXEMPLE 4 : (Z) 3-méthoxy 2-[2-méthyl 5-[2-(triméthylsilyl) 1-éthynyl] phénoxy] propénoate de méthyle

En opérant comme à l'exemple 1 mais dans le DMF et à 20°C, à partir des produits de départ appropriés, on a obtenu le produit recherché, fondant à 125°C.
RMN CDCl₃ ppm
0,24 (s) : Si(CH₃)₃ ; 2,33 (s) : les protons de CH₃ en 2 ; 3,71 (s) - 3,88 (s) : les protons des méthoxy ; 6,80 (d) : H₆ ; 7,05 (m) : H₃ et H₄ ; 7,32 (s) : H éthylénique ΔZ.

### EXEMPLE 5 : (Z) 3-méthoxy 2-[2-méthyl 5-[2-(triéthylsilyl) 1-éthynyl] phénoxy] propénoate de méthyle

En opérant comme à l'exemple 1 mais dans le DMF et à 20°C, à partir des produits de départ correspondants, on a obtenu le produit recherché, fondant à 93°C.
RMN CDCl₃ ppm
0,68 (q) - 1,03 (t) : les protons de l'éthyle ; 2,94 (s) : le méthyl en 2 ; 3,71 (s) - 3,80 (s) : les méthoxy ; 6,79 (s)-7,06 (m) : H₃, H₄ et H₆ ; 7,33 (s) : H ΔZ.

### EXEMPLE 6 : (Z) 3-méthoxy 2-[2-méthyl 5-[2-(terbutyl diméthylsilyl) 1-éthynyl] phénoxy] propénoate de méthyle

En opérant comme à l'exemple 1 mais dans le DMF et à 20°C, à partir des produits de départ correspondants, on a obtenu le produit recherché, fondant à 110°C.
RMN CDCl₃ ppm
0,10 (s) Si(CH₃)₂ ; 0,91 (s) SitBu ; 2,27 (s) CH₃ ; 3,64 (s) et 3,81 (s) les OMe ; 6,71 (d) H₆ ; 6,95 (dd) H₄ ; 7,01 (d) H₃ ; 7,26 (s) H ΔZ.

### EXEMPLE 7 : (Z) 3-méthoxy 2-[2-méthyl 5-[2-(diméthyl phényl silyl) 1-éthynyl] phénoxy] propénoate de méthyle

En opérant comme à l'exemple 1 mais dans le DMF et à 20°C, à partir des produits de départ correspondants, on a obtenu le produit recherché, fondant à 94°C.
RMN CDCl₃ ppm
0,51 (s) Si(CH₃)₂ ; 2,37 (s) CH₃ en 2 ; 3,73 (s) et 3,87 (s) les OMe ; 6,86 (s) H₆ ; 7,11 (s) H₃ et H₄ ; 7,35 (s) H ΔZ ; 7,40-7,43 (m) 3H Silh ; 7,69-7,73 (m) 2H Silh.

### Produit de départ des exemples 4 à 7 : (Z) 2-(5-iodo 2-méthylphénozy) 3-méthoxy propénoate de méthyle

### Stade A : 5-iodo 2-méthyl phénol

On dissout 10 g de 5-amino 2-méthyl phénol dans une solution de 150 ml d'eau, 100 ml de THF et 6 ml d'acide sulfurique concentré. On refroidit à 0°C. On ajoute à 0°C, goutte à goutte en 40 minutes une solution de 5,6 g de nitrite de sodium dans 30 ml d'eau. On agite ensuite pendant 30 minutes à 0°C la suspension obtenue et ajoute 17,5 g d'iodure de potassium dans 70 ml d'eau et 200 mg de cuivre métallique en poudre. On laisse remonter la température à 20°C en 30 minutes et maintient l'agitation pendant 1 heure à cette température. On verse le milieu réactionnel dans l'eau et extrait à l'acétate d'éthyle. On rassemble les phases organiques, les sèche sur sulfate de magnésium et évapore sous pression réduite. On chromatographie l'huile résiduelle en éluant avec le mélange heptane-acétate d'éthyle (1-1), pour donner 9,7 g de 5-iodo 2-méthyl phénol. F = 60°C.

### Stade B : (5-iodo 2-méthoxy phénoxy) acétate de méthyle

On ajoute 9,45 g de carbonate de potassium dans une solution renfermant 8,02 g de 5-iodo 2-méthyle phénol et de 3,3 ml de bromoacétate de méthyle dans 100 ml d'acétone anhydre. On chauffe au reflux sous atmosphère d'azote pendant 2 h 30 minutes puis verse dans de l'eau et extrait 3 fois au chlorure de méthylène. On rassemble les phases organiques, lave avec une solution aqueuse saturée en chlorure de sodium, sèche sur sulfate de magnésium, puis évapore sous pression réduite pour donner 9,95 g de produit recherché.

### Stade C : (Z)2-(5-iodo 2-méthyl phénoxy) 3-méthoxy propénoate de méthyle

On chauffe à 80°C une suspension de 8,2 g du produit préparé au stade B dans 40 ml de bis-diméthylamino terbutoxyméthane pendant 1 h 30 mn. Après retour à 20°C, on verse la solution obtenue dans l'eau et extrait du chlorure de méthylène. On rassemble les phases organiques, les sèche sur sulfate de magnésium et évapore sous pression réduite. On reprend l'huile résiduelle dans 200 ml de THF. On ajoute lentement à 0°C, 100 ml d'acide chlorhydrique 2N. On agite pendant 2 heures à 20°C, verse sur une solution aqueuse saturée en chlorure de sodium et extrait à l'éther éthylique. On rassemble les phases organiques, les sèche et évapore sous pression réduite. On reprend le produit obtenu dans 100 ml d'acétone. On ajoute 2,8 ml de sulfate de méthyle et 7,4 g de carbonate de potassium. On agite la suspension obtenue sous atmosphère d'azote pendant 3 heures, verse dans l'eau et extrait au chlorure de méthylène. On rassemble les phases organiques, les sèche sur sulfate de magnésium et évapore sous pression réduite. On recristallise le produit obtenu dans 40 ml d'isopropanol et obtient 8,0 g de produit recherché fondant à 112°C.

### EXEMPLE 8 : (Z) 3-méthoxy 2-[4-[2-triméthylsilyl) 1-éthynyl] (1,1'-biphényl) 2-yloxy] propénoate de méthyle

En opérant comme à l'exemple 1, mais dans le DMF et à 20°C, à partir du produit de départ décrit ci-après, on a obtenu le produit recherché fondant à 131°C.
RMN CDCl₃ ppm
0,26 : Si(CH₃)₃ ; 3,72 (s) - 3,84 : les OMe ; 6,94 (d) : H₆ ; 7,18 (d) : H₄ ; 7,28 (d) : H₃ ; 7,33 : H ΔZ ; 7,31 (t) 1H : du phényle en 2 ; 7,40 (t) 2H : du phényle en 2 ; 7,67 (d) 2H : du phényle en 2.

### EXEMPLE 9 : (Z) 3-méthoxy 2-[4-[2-triéthylsilyl) 1-éthynyl] (1,1'-biphényl) 2-yloxy] propénoate de méthyle

En opérant comme à l'exemple 1, mais dans le DMF et à 20°C, à partir du produit de départ décrit ci-après, on a obtenu le produit recherché fondant à 139°C.
RMN CDCl₃ ppm
0,70 (q) 6H : les protons de SiCH₂ ; 1,06 (t) 9H : CH₃ ; 3,73 (s) 3H ; 3,84 (s) 3H ; 6,94 (d) 1H ; 7,15 - 7,45 (m) 6H ; 7,67 (d) 2H.

### Produit de départ des exemples 8 et 9 :

Le produit de départ des exemples 6 et 7 a été préparé comme suit : **(Z) 2-[4-iodo (1,1'-biphényl) 2-yloxy] 3-méthoxy propénoate de méthyle**

### Stade A : 5-nitro 2-phényl anisole

On ajoute 50 ml d'une solution aqueuse de carbonate de sodium 2M dans une solution renfermant 12 g de 2-bromo 5-nitro anisole, 8,2 g d'acide phénylboronique et 1,2 g de tétra(triphénylphosphine) palladium. On chauffe au reflux pendant 7 heures, sous vive agitation. On laisse revenir le milieu réactionnel à 20°C, le verse dans l'eau et extrait à l'acétate d'éthyle. On rassemble les phases organiques, les sèche et évapore sous pression réduite. On chromatographie le produit obtenu sur silice en éluant avec le mélange heptane-éther isopropylique (9-1) et obtient ainsi 11,4 g de produit recherché, fondant à 71°C.

### Stade B : 3-méthoxy 4-phényl aniline

On ajoute 2,6 g de palladium sur charbon à 10 % massique dans une solution de 11,2 g de produit obtenu au stade A dans 150 ml d'acétate d'éthyle. On agite la suspension obtenue sous 1,3 atmosphère d'hydrogène. Après arrêt de l'absorption de l'hydrogène, on ramène le milieu réactionnel sous atmosphère normale, on filtre et évapore sous pression réduite pour obtenir 9,64 g de produit recherché fondant à 56°C.

### Stade C : 5-iodo 2-phényl anisole

On dissout à 40°C, 8 g de produit obtenu au stade B dans 60 ml d'acide acétique glacial. On ajoute alors une solution de 5 ml d'acide sulfurique concentré dans 80 ml d'eau. On refroidit à 0°C. On ajoute alors goutte à goutte en une heure une solution de 2,77 g de nitrite de sodium dans 35 ml d'eau. On agite une heure à 0°C, et ajoute goutte à goutte une solution de 13,33 g d'iodure de potassium dans 25 ml d'eau. On maintient la suspension obtenue pendant une heure à 0°C, amène à 10°C en 40 minutes, maintient à 10°C pendant une heure, et amène à 20°C en 30 minutes. On verse dans l'eau, extrait à l'acétate d'éthyle. On rassemble les phases organiques et les lave (solution aqueuse de NaHSO₃ puis NaHCO₃). On sèche et évapore sous pression réduite. On chromatographie le produit obtenu en éluant avec le mélange heptane-chlorure de méthylène (9-1) et obtient 9,6 g de produit recherché fondant à 57°C.

### Stade D : (5-iodo 2-phényl) phénol

On ajoute à 0°C goutte à goutte sous atmosphère d'azote 1,83 ml de tribromure de bore dans une solution renfermant 6 g de 4-iodo 2-méthoxy biphényl. On agite pendant 1 heure à 0°C puis 5 h à 20°C et verse sur un mélange d'eau et de glace. On agite la suspension obtenue pendant 15 minutes et extrait au chlorure de méthylène. On rassemble les phases organiques, les sèche et évapore sous pression réduite. On obtient ainsi 5,65 g de 4-iodo 2-hydroxy biphényle.

### Stade E : (5-iodo 2-phényl phénoxy) acétate de méthyle

On ajoute 5,3 g de carbonate de potassium, dans une solution renfermant 5,69 g de 4-iodo 2-hydroxy biphényle et 1,82 ml de bromoacétate de méthyle. On chauffe au reflux la suspension obtenue sous atmosphère d'azote pendant 2 h 30, verse dans l'eau et extrait au chlorure de méthylène. On rassemble les phases organiques, les lave, les sèche et évapore sous pression réduite. On chromatographie le produit obtenu en éluant avec le mélange heptane-chlorure de méthylène (1-1) et obtient 6,98 g de produit recherché fondant à 55°C.

### Stade F : (Z) 2-[4-iodo (1,1'-biphényl) 2-yloxy] 3-méthoxy propénoate de méthyle

En opérant comme au dernier stade des préparations des exemples 1 et 2, on a obtenu le produit recherché fondant à 132°C.

### EXEMPLE 10 : (Z) 2-[2,4-dichloro 5-[2-(triméthylsilyl) 1-éthynyl] phénoxy] 3-méthoxy propénoate de méthyle

En opérant comme à l'exemple 1 à partir du produit de départ décrit ci-après, on a obtenu le produit recherché, fondant à 142°C.
RMN CDCl₃ ppm
0,28 (s) Si(CH₃)₃ ; 3,72 (s) et 3,89 (s) les OCH₃ ; 6,89 (s) H₆ ; 7,35 (s) H ΔZ ; 7,41 (s) H₃.

### Produit de départ de l'exemple 10 : (Z) 2-(5-bromo 2,4-dichloro phénoxy) 3-méthoxy propénoate de méthyle

Le produit de départ de l'exemple 10 a été préparé comme suit :

### Stade A : 5-bromo 2,4-dichloro anisole

On chauffe à 90°C pendant 20 heures une solution de 1 g de 5-bromo 2-chloro anisole et de 0,66 g de N-chloro succinimide dans 10 ml d'acide acétique. On verse dans de l'eau, extrait au chlorure de méthylène. On lave la phase organique par une solution aqueuse saturée en bicarbonate de sodium, sèche sur sulfate de magnésium et évapore sous pression réduite. On obtient 1,15 g de produit recherché.

### Stade B : 5-bromo 2,4-dichloro phénol

En opérant comme au stade A de la préparation du produit de départ des exemples 1 et 2, on a obtenu le produit recherché.

### Stade C : (5-bromo 2,4-dichloro phénoxy) acétate de méthyle

On a obtenu le produit à partir du 5-bromo 2,4-dichloro phénol en opérant comme au stade B du produit de départ des exemples 1 et 2.

### Stade D : (Z) 2-(5-bromo 2,4-dichloro phénoxy) 3-méthoxy propénoate de méthyle

En opérant comme au dernier stade des préparations des exemples 1 et 2, on a obtenu le produit recherché fondant à 153°C.

### EXEMPLES 11 à 16 :

En opérant comme indiqué dans les exemples précédents, en utilisant au départ les produits appropriés obtenus de manière analogue à celle indiquée dans les préparations de produits de départ ci-dessus, on a obtenu :

### EXEMPLE 11 : (Z) 3-méthoxy 2-[2-éthyl 5-[2-(triéthylsilyl) 1-éthynyl] phénoxy] propénoate de méthyle.

F = 75°C.

### EXEMPLE 12 : (Z) 2-[2-bromo 5-[2-(triéthylsilyl) 1-éthynyl] phénoxy] 3-méthoxy propénoate de méthyle.

F = 142°C.

### EXEMPLE 13 : (Z) 2-[2-chloro 5-[2-(terbutyl diméthylsilyl) 1-éthynyl] phénoxy] 3-méthoxy propénoate de méthyle

F = 137°C.

### EXEMPLE 14 : (Z) 2-[2-bromo méthyl 5-[2-(terbutyl diméthyl silyl) 1-éthynyl] phénoxy 3-méthoxy propénoate de méthyle.

F = 105°C.

### EXEMPLE 15 : (Z) 2-[2-fluoro 5-[2-(triméthylsilyl) 1-éthynyl] phénoxy] 3-méthoxy propénoate de méthyle.

F = 132°C.

### EXEMPLE 16 : (Z) 2-[2-fluoro 5-[2-(triéthylsilyl) 1-éthynyl] phénoxy] 3-méthoxy propénoate de méthyle.

F = 78°C.

### EXEMPLE 17 : (Z) 2-[2-fluorométhyl 5-[2-(triéthylsilyl) 1éthynyl] phénoxy) 3-méthoxy propénoate de méthyle.

F = 86°C.

### EXEMPLE 18 : (Z) 2-[2-chloro 5-[2-[diméthyl (n-octyl] 1-éthynyl] phénoxy) 3-méthoxy propénoate de méthyle.

F = 64°C.

### EXEMPLE 19 : (Z) 2-[2-chloro 5-[2-[éthyl (diméthyl) silyl) 1-éthynyl] phénoxy) 3-méthoxy propénoate de méthyle

F = 133°C.

### EXEMPLE 20 : (Z) 2-[2-chloro 5-[2-(diméthyl) n-propyl) silyl) 1-éthynyl] phénoxy 3-méthoxy propénoate de méthyle.

F = 99°C.

### EXEMPLE 21 : (Z) 2-[2-chloro 5-[2-[(n-butyl) (diméthyl) silyl] 1-éthynyl] phénoxy) 3-méthoxy propénoate de méthyle.

F = 49°C.

### EXEMPLE 22 : (Z) 2-[2-chloro 5-[2-[(allyl) (diméthyl) silyl] 1-éthynyl] phénoxy] 3-méthoxy propénoate de méthyle.

F = 96°C.

### EXEMPLE 23 : (Z) 2-[2-chloro 5-[2-[(2,2-diméthyl) (1,1,2-triméthyl) silyl] 1-éthynyl] phénoxy] 3-méthoxy propénoate de méthyle.

F = 83°C.

### EXEMPLE 24 : (Z) 2-[2-chloro 5-[2-[trifluoropropyl) diméthyl) silyl] 1-éthynyl] phénoxy] 3-méthoxy propénoate de méthyle.

F = 100°C.

### EXEMPLE 25 : (Z) 2-[2-terbutyl 5-[2-(triéthylsilyl) 1-éthynyl] phénoxy) 3-méthoxy propénoate de méthyle

### Etude de l'activité des composés de l'invention

### Etude de l'activité acaricide sur Tetranychus Urticae

On utilise des plants de haricot comportant 2 feuilles infestées de 30 femelles de Tetranychus Urticae par feuille et mis sous bonette aérée sous plafond lumineux en lumière constante. Les plants sont traités au pistolet Fisher : 4 ml 5 de solution toxique par plant d'un mélange à volume égal d'eau et d'acétone. On laisse sécher pendant une 1/2 heure puis on procède à l'infestation. Les contrôles de mortalité sont effectués au bout de 3 jours.

### Résultats : Dès la dose de 100 ppm, les produits de l'invention présentent une activité acaricide intéressante.

### Activité sur Plasmopara viticola

6 semaines après les semences, des plants de vigne de variété Riesling Ehrenfelder, sont traités avec une suspension aqueuse de principe actif jusqu'à ruissellement.

Une fois le produit vaporisé sec, les plants sont inoculés avec une suspension de zoosporanges de Plasmopara viticola et les plants humides placés dans une chambre à 23°C et à une humidité atmosphérique relative de 80 ~ 90 %.

Après 7 jours d'incubation, les plants sont placés dans une chambre de culture pour favoriser le développement des champignons. L'étendue de la maladie est alors évaluée.

Le degré d'efficacité des produits est évalué par rapport à un témoin non traité infesté.

A une concentration inférieure à 25 ppm, les produits des exemples 1, 4 et 5 ont une efficacité voisine de 100 %.

### Activité sur Pyrenophora teres

On traite avec une suspension aqueuse de principe actif des plants d'orge de variété Igri au stade "2 feuilles" jusqu'à ruissellement.

Une fois le produit vaporisé sec, on inocule aux plants une suspension aqueuse de spores de Pyrenophora teres et laisse incuber pendant 16 heures dans une chambre à humidité atmosphérique relative de 100 %. On laisse ensuite les plants infestés se développer en serre à 25°C sous une humidité relative de 80 %.

Une semaine après l'inoculation, l'étendue de la maladie est évaluée. Le degré d'efficacité des produits est évalué par rapport à un témoin non traité infesté.

A une concentration inférieure à 25 ppm de principe actif, les produits des exemples 1, 4 et 5 ont une efficacité voisine de 100 %.

### Activité sur Erysiphe graminis

Des plants d'orge au stade "2 feuilles" sont inoculés avec des conidies d'oïdium de l'orge (Erysiphe graminés p sp. hordie) et mis en serre à 20°C sous une humidité relative de 50 %, un jour après l'inoculation. Les plants sont ensuite traités avec une suspension aqueuse de principe actif. On recherche les symptômes d'oïdium. Le degré d'efficacité est évalué par rapport au témoin infesté non traité.

A une concentration inférieure à 25 ppm les composés des exemples 1, 4 et 5 ont une efficacité voisine de 100 %.

### Activité sur Leptosphaeria nodorum

On traite avec une suspension aqueuse de principe actif du blé de variété Jubilar, au stade "2 feuilles" jusqu'à ruissellement. Une fois le produit vaporisé sec, on inocule aux plantes une suspension aqueuse de picnospores de Leptosphaeria nodorum, et laisse incuber pendant plusieurs heures dans une chambre à environnement contrôlé, à une humidité atmosphérique relative de 100 %. On laisse les plants se développer en serre sous une humidité atmosphérique relative de 90 % jusqu'à l'apparition de symptômes.

Le degré d'efficacité est exprimé par rapport à un témoin non traité infesté.

A une concentration inférieure à 25 ppm les composés des exemples ont une efficacité de 100 %.

## Revendications

1. Les composés de formule (I) : 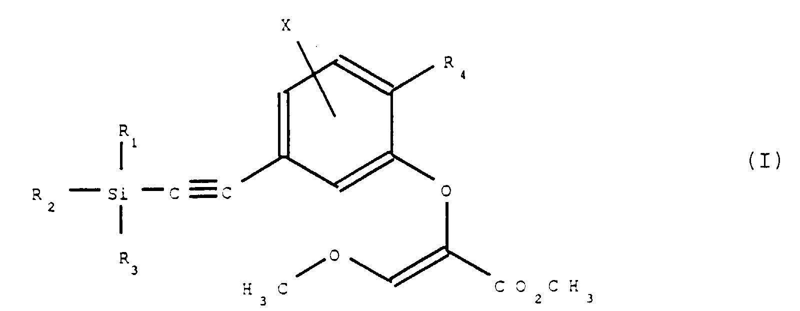 dans lesquels :
- R₁, R₂ et R₃ identiques ou différents représentent un radical alkyle linéaire ramifié ou cyclique alkényle ou alkynyle renfermant jusqu'à 8 atomes de carbone éventuellement substitué par un ou plusieurs atomes d'halogène, un radical aryle éventuellement substitué par un ou plusieurs atomes d'halogène, un ou plusieurs radicaux hydroxyle, un ou plusieurs radicaux alkyle linéaires ou ramifiés éventuellement substitués par un ou plusieurs atomes d'halogène, un ou plusieurs radicaux O-alkyle ou S-alkyle éventuellement substitués par un ou plusieurs atomes d'halogène,
- X représente un atome d'hydrogène, un atome d'halogène, un radical alkyle, alkényle, alkynyle, O-alkyle, O-alkényle, O-alkynyle, S-alkyle, S-alkényle ou S-alkynyle, éventuellement substitués par un ou plusieurs atomes d'halogène et renfermant jusqu'à 11 atomes de carbone, un radical aryle renfermant jusqu'à 14 atomes de carbone, un radical C=N, NO₂, NH₂, 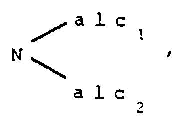 CO₂alc₃, alc₁, alc₂ et alc₃, identiques ou différents l'un de l'autre, représentant un radical alkyle renfermant jusqu'à 8 atomes de carbone,
- R₄ représente l'une des valeurs indiquées ci-dessus pour X à l'exception de l'hydrogène.

2. Les composés de formule (I) tels que définis à la revendication 1, dans lesquels la géométrie de la double liaison exo (éther d'énol) est Z.

3. Les composés de formule (I) tels que définis à la revendication 1, dans lesquels R₁, R₂ et R₃ représentent chacun un radical alkyle renfermant jusqu'à 4 atomes de carbone.

4. Les composés de formule (I) tels que définis à la revendication 3 dans lesquels R₁, R₂ et R₃ représentent chacun un radical méthyle ou éthyle.

5. Les composés de formule (I) tels que définis à l'une quelconque des revendications 1 à 4, dans lesquels R₄ représente un atome d'halogène.

6. Les composés de formule (I) tels que définis à l'une quelconque des revendications 1 à 4 dans lesquels R₄ représente un radical alkyle renfermant jusqu'à 4 atomes de carbone.

7. Les composés de formule (I) tels que définis à la revendication 1 dont les noms suivent :
- (Z) 2-[2-chloro 5-[2-(triméthylsilyl) 1-éthynyl] phénoxy] 3-méthoxy propénoate de méthyle,
- (Z) 3-méthoxy 2-[2-méthyl 5-[2-(triméthylsilyl) 1-éthynyl] phénoxy] propénoate de méthyle,
- (Z) 3-méthoxy 2-[2-méthyl 5-[2-(triéthylsilyl) 1-éthynyl] phénoxy] propénoate de méthyle.

8. Procédé de préparation des composés de formule (I) tels que définis à l'une quelconque des revendications 1 à 7, caractérisé en ce que l'on soumet un composé de formule (II) : 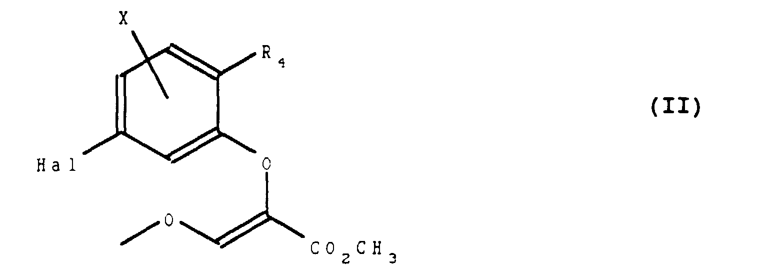 dans laquelle Hal représente un atome d'halogène, X et R₄ conservent leur signification indiquée à la revendication 1, à l'action d'un composé de formule (III) : 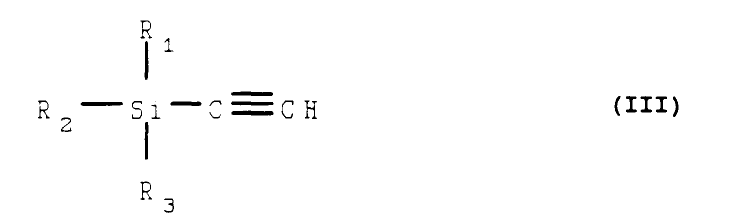 dans laquelle R₁, R₂ et R₃ conservent leur signification indiquée à la revendication 1, pour obtenir le composé de formule (I) correspondant.

9. A titre de produits chimiques les composés de formule (II) tels que définis à la revendication 8.

10. Les compositions pesticides renfermant comme principe actif au moins un composé de formule (I) tel que défini à l'une quelconque des revendications 1 à 7.

11. Les compositions insecticides renfermant comme principe actif au moins un composé de formule (I) tel que défini à l'une quelconque des revendications 1 à 7.

12. Les compositions acaricides renfermant comme principe actif au moins un composé de formule (I) tel que défini à l'une quelconque des revendications 1 à 7.

13. Les compositions fongicides renfermant comme principe actif au moins un composé de formule (I) tel que défini à l'une quelconque des revendications 1 à 7.

## Patentansprüche

1. Verbindungen der Formel (I) 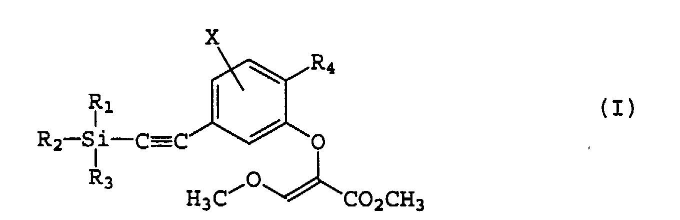 in der
- R₁, R₂ und R₃, gleich oder verschieden, einen linearen, verzweigten oder cyclischen Rest Alkyl, Alkenyl oder Alkinyl mit bis zu 8 Kohlenstoffatomen darstellen, gegebenenfalls substituiert durch ein oder mehrere Halogenatome, einen Rest Aryl, gegebenenfalls substituiert durch ein oder mehrere Halogenatome, einen oder mehrere Reste Hydroxyl, einen oder mehrere lineare oder verzweigte Reste Alkyl, gegebenenfalls substituiert durch ein oder mehrere Halogenatome, einen oder mehrere Reste O-Alkyl oder S-Alkyl, gegebenenfalls substituiert durch ein oder mehrere Halogenatome,
- X ein Wasserstoffatom, ein Halogenatom, einen Rest Alkyl, Alkenyl, Alkinyl, O-Alkyl, O-Alkenyl, O-Alkinyl, S-Alkyl, S-Alkenyl oder S-Alkinyl, gegebenenfalls substituiert durch ein oder mehrere Halogenatome und umfassend bis zu 11 Kohlenstoffatome, einen Rest Aryl mit bis zu 14 Kohlenstoffatomen, einen Rest C≡N, NO₂, NH₂, 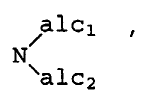 CO₂alc₃ bedeutet, worin alc₁, und alc₃, untereinander gleich oder verschieden, einen Rest Alkyl mit bis zu 8 Kohlenstoffatomen darstellen,
- R₄ einen der oben für X angegebenen Werte darstellt, mit Ausnahme von Wasserstoff.

2. Verbindungen der Formel (I) wie in Anspruch 1 definiert, worin die Geometrie der Doppelbindung exo (Enol-Ether) Z ist.

3. Verbindungen der Formel (I) wie in Anspruch 1 definiert, worin R₁, R₂ und R₃ jeweils einen Rest Alkyl mit bis zu 4 Kohlenstoffatomen darstellen.

4. Verbindungen der Formel (I) wie in Anspruch 3 definiert, worin R₁, R₂ und R₃ jeweils einen Rest Methyl oder Ethyl darstellen.

5. Verbindungen der Formel (I) wie in irgendeinem der Ansprüche 1 bis 4 definiert, worin R₄ ein Wasserstoffatom ist.

6. Verbindungen der Formel (I) wie in irgendeinem der Ansprüche 1 bis 4 definiert, worin R₄ einen Rest Alkyl mit bis zu 4 Kohlenstoffatomen bedeutet.

7. Verbindungen der Formel (I) wie in Anspruch 1 definiert, deren Namen folgen:
- (Z)-3-Methoxy-2-{2-chlor-5- [2-(trimethylsilyl)-1-ethinyl]-phenoxy}-propensäure-methylester,
- (Z)-3-Methoxy-2-{2-methyl-5- [2-(trimethylsilyl) -1-ethinyl]-phenoxy}-propensäure-methylester,
- (Z)-3-Methoxy-2-{2-methyl-5-[2-(triethylsilyl)-1-ethinyl]-phenoxy}-propensäure-methylester.

8. Verfahren zur Herstellung der Verbindungen der Formel (I) wie in irgendeinem der Ansprüche 1 bis 7 definiert, dadurch gekennzeichnet, daß man eine Verbindung der Formel (II) 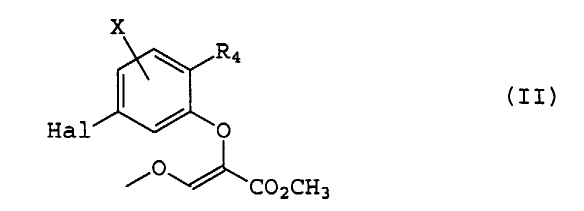 in der Hal ein Halogenatom darstellt, X und R₄ ihre in Anspruch 1 angegebene Bedeutung behalten, der Einwirkung einer Verbindung der Formel (III) 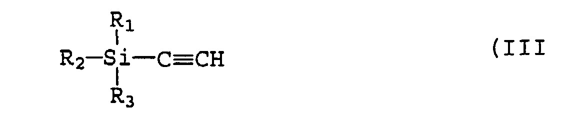 unterzieht, in der R₁, R₂ und R₃ ihre in Anspruch 1 angegebene Bedeutung behalten, um die entsprechende Verbindung der Formel (I) zu erhalten.

9. Als chemische Produkte die Verbindungen der Formel (II) wie in Anspruch 8 definiert.

10. Pestizide Zusammensetzungen, umfassend als Wirkstoff mindestens eine Verbindung der Formel (I) wie in irgendeinem der Ansprüche 1 bis 7 definiert.

11. Insektizide Zusammensetzungen, umfassend als Wirkstoff mindestens eine Verbindung der Formel (I) wie in irgendeinem der Ansprüche 1 bis 7 definiert.

12. Akarizide Zusammensetzungen, umfassend als Wirkstoff mindestens eine Verbindung der Formel (I) wie in irgendeinem der Ansprüche 1 bis 7 definiert.

13. Fungizide Zusammensetzungen, umfassend als Wirkstoff mindestens eine Verbindung der Formel (I) wie in irgendeinem der Ansprüche 1 bis 7 definiert.

## Claims

1. The compounds of formula (I): 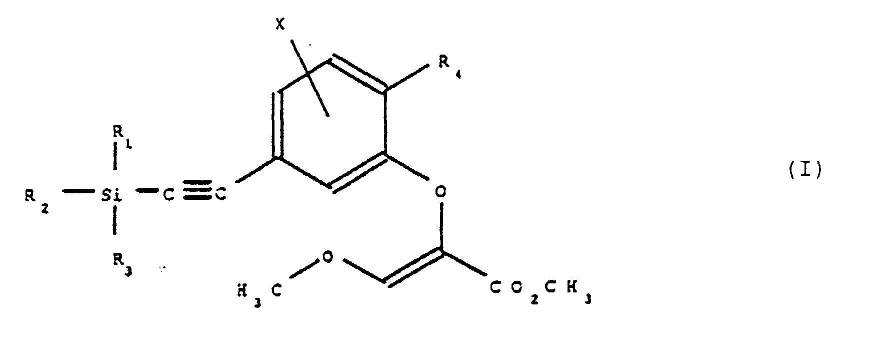 in which:
- R₁, R₂ and R₃ identical or different represent a linear, branched or cyclic alkyl, alkenyl or alkynyl radical containing up to 8 carbon atoms optionally substituted by one or more halogen atoms, an aryl radical optionally substituted by one or more halogen atoms, one or more hydroxyl radicals, one or more linear or branched alkyl radicals optionally substituted by one or more halogen atoms, one or more O-alkyl or S-alkyl radicals optionally substituted by one or more halogen atoms,
- X represents a hydrogen atom, a halogen atom, an alkyl, alkenyl, alkynyl, O-alkyl, O-alkenyl, O-alkynyl, S-alkyl, S-alkenyl or S-alkynyl radical, optionally substituted by one or more halogen atoms and containing up to to 11 carbon atoms, an aryl radical containing up to 14 carbon atoms, a C≡N, NO₂, NH₂, 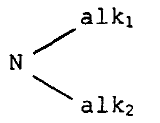 CO₂alk₃ radical, alk₁, alk₂ and alk₃, identical to or different from one another, representing an alkyl radical containing up to 8 carbon atoms,
- R₄ represents one of the values indicated above for X with the exception of hydrogen.

2. The compounds of formula (I) as defined in claim 1, in which the geometry of the exo double bond (enol ether) is Z.

3. The compounds of formula (I) as defined in claim 1, in which R₁, R₂ and R₃ each represent an alkyl radical containing up to 4 carbon atoms.

4. The compounds of formula (I) as defined in claim 3 in which R₁, R₂ and R₃ each represent a methyl or ethyl radical.

5. The compounds of formula (I) as defined in any one of claims 1 to 4, in which R₄ represents a halogen atom.

6. The compounds of formula (I) as defined in any one of claims 1 to 4 in which R₄ represents an alkyl radical containing up to 4 carbon atoms.

7. The compounds of formula (I) as defined in claim 1 the names of which follow:
- methyl (Z) 2-[2-chloro 5-[2-(trimethylsilyl) 1-ethynyl] phenoxy] 3-methoxy propenoate,
- methyl (Z) 3-methoxy 2-[2-methyl 5-[2-(trimethylsilyl) 1-ethynyl] phenoxy] propenoate,
- methyl (Z) 3-methoxy 2-[2-methyl 5-[2-(triethylsilyl) 1-ethynyl] phenoxy] propenoate.

8. Process for the preparation of the compounds of formula (I) as defined in any one of claims 1 to 7, characterized in that a compound of formula (II): 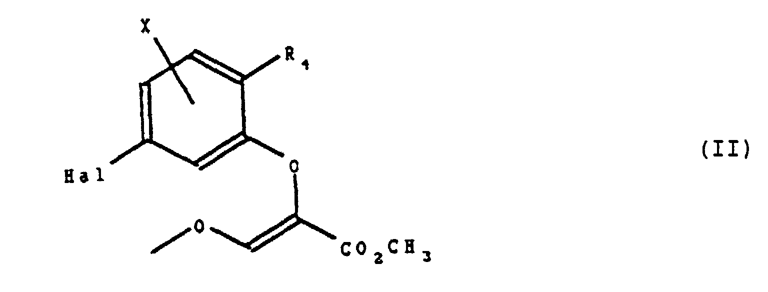 in which Hal represents a halogen atom, X and R₄ retain their meaning indicated in claim 1, is subjected to the action of a compound of formula (III): 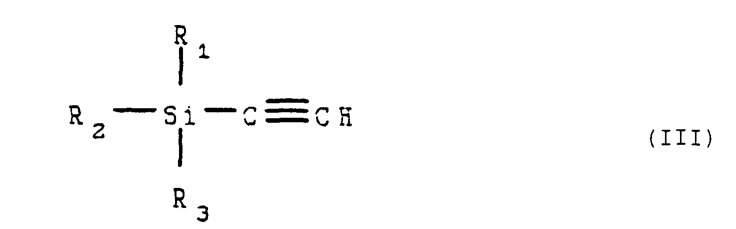 in which R₁, R₂ and R₃ retain their meaning indicated in claim 1, in order to obtain the corresponding compound of formula (I).

9. As chemical products the compounds of formula (II) as defined in claim 8.

10. The pesticide compounds containing at least one compound of formula (I) as defined in any one of claims 1 to 7 as active ingredient.

11. The insecticide compounds containing at least one compound of formula (I) as defined in any one of claims 1 to 7 as active ingredient.

12. The acaricide compounds containing at least one compound of formula (I) as defined in any one of claims 1 to 7 as active ingredient.

13. The fungicide compounds containing at least one compound of formula (I) as defined in any one of claims 1 to 7 as active ingredient.
